# EUROPÄISCHE PATENTANMELDUNG

(11) **EP 2 078 815 A2**
(43) Veröffentlichungstag der Anmeldung: **15.07.2009**
(21) Anmeldenummer: 08105789.5
(22) Anmeldetag: 13.11.2008
(51) Int. Cl.: E06B 3/263, E06B 3/267, E06B 3/277

(54) **Vorrichtung zum in-situ Ausschäumen eines extrudierten Hohlprofils**

(30) Priorität: 11.01.2008 DE 202008000518 U; 24.06.2008 DE 202008000076 U
(71) Anmelder: Henkenjohann, Johann, 33415 Verl (DE)
(72) Erfinder: Henkenjohann, Johann, 33415 Verl (DE)
(74) Vertreter: Strauss, Hans-Jochen

(57) **Zusammenfassung**

Um ein aus Metall oder Kunststoff extrudiertes Mehrkammer-Hohlprofil (1) beliebiger Länge bei dem mindestens eine der Kammern (2) mit einem Kammerquerschnitt, gebildet von einem Kammerboden (5) und einer Trennwandung (7), sowie von diese beiden verbindenden Seitenwänden (4), ausschäumbar ist, wobei in diese Kammer (2) ein wannenförmig ausgebildeter Träger (11) mit dem für das Ausschäumen notwendigen Kunststoffmaterial (8), insbesondere Polyurethan-Material eingeführt ist, so weiter zu bilden, dass die Deformation der Seitenwände (4) durch den sich beim Ausschäumen oder auch nachträglich einstellende Druckaufbau vermieden wird, wird vorgeschlagen, zur Vergrößerung des dem aufgeschäumten Material (9) zur Verfügung stehenden Querschnitts und damit über die Längserstreckung der Mehrkammer-Hohlprofile (1) auch dessen Volumens einen ein Zusatzvolumen bildenden Hohlraum (13) zwischen dem Träger (11) und der festen Trennwandung (7) durch Beabstandung des Trägers (11) vorzusehen; alternativ wird die Trennwandung (7) zur Aufnahme des Überschusses verformbar bzw. zu dessen Übertritt in die nicht auszuschäumende Nachbarkammer (3) aufreißbar ausgebildet.

## Beschreibung

### Technisches Umfeld

Die Erfindung betrifft ein Mehrkammer-Hohlprofil beliebiger Länge, extrudiert aus Metall, insbesondere Aluminium, oder aus Kunststoff mit von festen Wänden umgebenen Kammern, von denen mindestens eine der Kammern mit einem Kammerquerschnitt, gebildet von einem Kammerboden und einer die Kammer gegenüber einer nicht auszuschäumenden Kammer abgrenzenden Trennwandung, sowie von diese beiden verbindenden Seitenwänden, ausschäumbar ist, wobei in diese Kammer ein wannenförmig ausgebildeter Träger mit dem für das Ausschäumen notwendigen Kunststoffmaterial, insbesondere Polyurethan-Material eingeführt ist.

### Stand der Technik

Beim Ausschäumen von Mehrkammer-Hohlprofilen wird das aufschäumende Material in die auszuschäumende Kammer des Hohlprofils in der Menge eingebracht, die zum Ausschäumen ausreichend erscheint. Jedoch kommt es dabei erfahrungsgemäß immer wieder zu Deformationen des Querschnitts der Mehrkammer-Hohlprofile, da das Aufschäumvolumen der Kunststoff-Schäume nicht vorhersehbar ist und somit die zum Ausschäumen ausreichend erscheinende Menge nicht mit Sicherheit vorbestimmbar ist. Die Unsicherheit liegt - bezogen auf das aufgeschäumte Volumen - im Bereich von einigen Prozent. Diese Unsicherheit kann ein "Überschäumen" des verfügbaren Kammerquerschnitts zur Folge haben, wodurch sich unter Umständen in der auszuschäumenden Kammer ein sehr hoher Druck ausbildet, der auf die Kammerwände wirkt. Dieser Druck führt letztendlich zu den unerwünschten Deformationen der auszuschäumenden Kammer. Unter Umständen können zwischen Kammerboden und Trennwandung eingesetzte Seitenwände aus ihren formschlüssigen Verbindungen gepresst werden.

### Aufgabe

Damit stellt sich die Aufgabe, das Ausschäumen von Leichtmetall- oder Kunststoff-Hohlkammerprofilen so weiter zu bilden, dass ein solcher, mit Deformation der Wandung verbundener Druckaufbau, der sich beim Ausschäumen oder auch nachträglich einstellt, vermieden wird, und das einfach und wirtschaftlich anzuwenden ist. In Weiterführung der Aufgabenstellung soll angegeben werden, wie die Einbringmittel für das aufzuschäumende Material oder das auszuschäumende Leichtmetall- oder Kunststoff-Hohlkammerprofil zur Vermeidung solcher Wandungs-Deformation vorteilhaft auszubilden sind.

### Lösung

Die Lösung dieser Aufgaben ist durch die in den unabhängigen Ansprüchen definierten Merkmale gegeben; vorteilhafte Weiterbildungen und bevorzugte Ausführungsformen sind in den auf die entsprechenden unabhängigen Ansprüche rückbezogenen Unteransprüchen definiert.

Um einen Aufbau eines Druckes beim "Überschäumen" zu unterdrücken, bedarf es einer Vergrößerung des dem aufgeschäumten Material zur Verfügung stehenden Querschnitts und damit über die Längserstreckung der Mehrkammer-Hohlprofile auch deren Volumens, das hier wegen des konstanten Querschnitts extrudierter Profilen dem Querschnitt gleichgesetzt wird.

Bei einer ersten Ausführungsform wird der Querschnitt der auszuschäumenden Kammer mit dem Einbringen des aufzuschäumenden Materials verkleinert. Dazu wird der Träger, auf dem das aufzuschäumende Material in die auszuschäumende Kammer eingebracht wird, so ausgebildet, dass er sich unter Bildung eines Ausgleichquerschnitts gegen den Kammerboden der auszuschäumenden Kammer abstützt. Der Querschnitt dieses Hohlraums bildet das Ausgleichvolumen und ist klein gegenüber dem Querschnitt der auszuschäumenden Kammer. Nimmt das aufgeschäumte Material wegen dieses Überschäumens einen Querschnitt ein, der größer ist als der Querschnitt der auszuschäumenden Kammer, wird der Träger in den zwischen diesem und dem Kammerboden gebildeten Ausgleichquerschnitt hinein verformt, so dass ein Zusatzquerschnitt zur Aufnahme des überschäumenden Materials zur Verfügung steht.

Um eine Möglichkeit zu schaffen, dass sich die aufschäumende Masse dem Querschnitt der auszuschäumenden Kammer unter Berücksichtigung eines "Überschäumens" anpassen kann, ist bei einer zweiten Ausführungsform eine Membran vorgesehen, die den Ausschäumquerschnitt von dem Ausgleichsquerschnitt trennt. Nimmt das aufschäumende Material ein Volumen an, das größer ist als der Querschnitt, den die auszuschäumenden Kammer zur Verfügung stellt, wölbt sich die Membran in den Ausgleichquerschnitt hinein aus, so dass der in Anspruch genommene Teil des Ausgleichsquerschnitts ein Zusatzvolumen für den überschüssigen Schaum bildet. Dieses Auswölben kann durch elastische oder plastische Verformbarkeit der Membran erfolgen. Dabei kann auch die Membran aufreißen. Ein bei einem solchen Überschäumen entstehender Überdruck und ein damit verbundenes Verformen, insbesondere der Seitenwände des Mehrkammer-Hohlprofils, werden somit von vorn herein unterbunden.

Schließlich wird bei einer dritten Ausführungsform ein sich in Richtung der Längsrichtung des Mehrkammer-Hohlprofils erstreckender Schlauch zusammen mit dem Träger eingebracht, dessen Querschnitt als Ausgleichquerschnitt verfügbar ist. Auch mit einem solchen Schlauch werden ein bei einem Überschäumen entstehender Überdruck und ein damit verbundenes Verformen des Mehrkammer-Hohlprofils von vorn herein unterbunden.

### Beschreibung der Zeichnungen

Das Wesen der Erfindung wird an Hand der Figuren 1 - 4 beispielhaft dargestellt; dabei zeigen:
- Fig. 1a:: Mehrkammer-Hohlprofil mit auf wannenförmigen Träger eingebrachter, aufzuschäumender Masse (Stand der Technik);
- Fig. 1b:: Mehrkammer-Hohlprofil nach Figur 1a, Profil ausgeschäumt (mit Wandungs-Deformation - Stand der Technik);
- Fig. 2a:: Mehrkammer-Hohlprofil mit auf "H"-förmigen Träger eingebrachter, aufzuschäumender Masse;
- Fig. 2b:: Mehrkammer-Hohlprofil nach Figur 2a, Profil ausgeschäumt;
- Fig. 3a:: Mehrkammer-Hohlprofil mit auf "W"-förmigen Träger eingebrachter, aufzuschäumender Masse;
- Fig. 3b:: Mehrkammer-Hohlprofil nach Figur 2a, Profil ausgeschäumt;
- Fig. 4a:: Mehrkammer-Hohlprofil mit Membran zwischen der auszuschäumenden Kammer und der benachbarten Kammer und mit auf wannenförmigen Träger eingebrachter, aufzuschäumender Masse;
- Fig. 4b: Mehrkammer-Hohlprofil mit Membran nach Fig. 4a, Profil ausgeschäumt;

### Ausführungsbeispiele

In allen Figuren ist ein Mehrkammer-Hohlprofil 1 im Querschnitt dargestellt, dessen auszuschäumende Kammer 2 an eine benachbarte Kammer 3 angrenzt. Der Querschnitt der auszuschäumenden Kammer wird von einen Kammerboden 5 sowie einer dem Kammerboden 5 gegenüberliegenden, die auszuschäumende Kammer 2 von der dortigen, benachbarten Kammer 3 abteilenden Trennwandung 7 und den sich zwischen Kammerboden 5 und Trennwandung 7 erstreckenden Seitenwände 4 begrenzt.

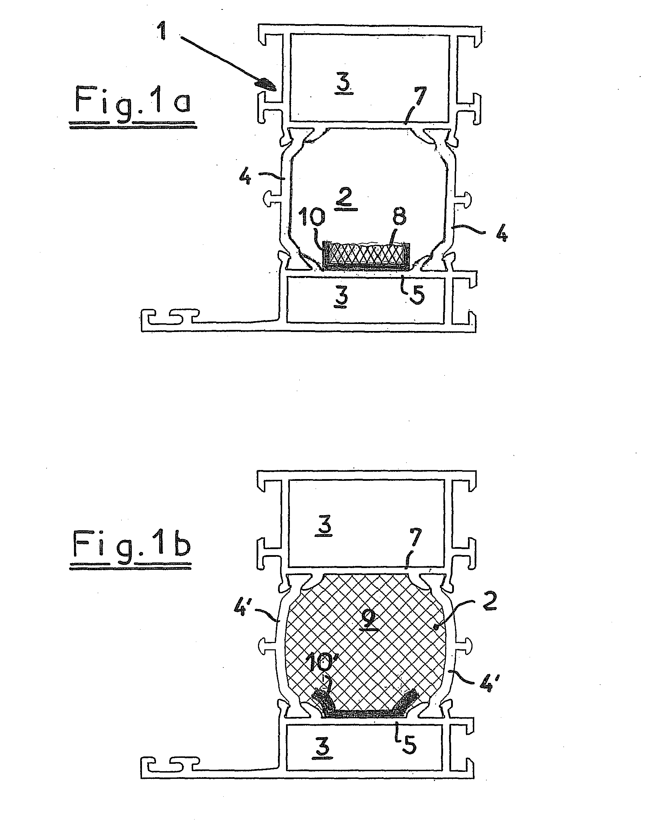

In diese auszuschäumende Kammer 2 ist der Träger 10 der aufzuschäumenden Masse 8 eingebracht (Fig. 1a), der mit seitlichen Schenkeln versehen als Wanne ausgebildet ist. Die aufzuschäumende Masse 8 ist auf diesem durch seitliche Schenkel begrenzten Träger 10 in der Menge aufgebracht, die je Längeneinheit des Profils zum Ausschäumen des zugeordneten Profils üblicherweise benötigt wird. Da jedoch das der aufgeschäumten Masse eingenommene Volumen nicht genau vorher bestimmbar ist, kommt es ab und zu zu einem "Überschäumen" mit Bildung eines Überdrucks, der - wie in Figur1 b dargestellt - die Seitenwandungen 4 des Mehrkammer-Hohlprofils 1 nach außen verformen (Seitenwandung 4' - Fig. 1 b).

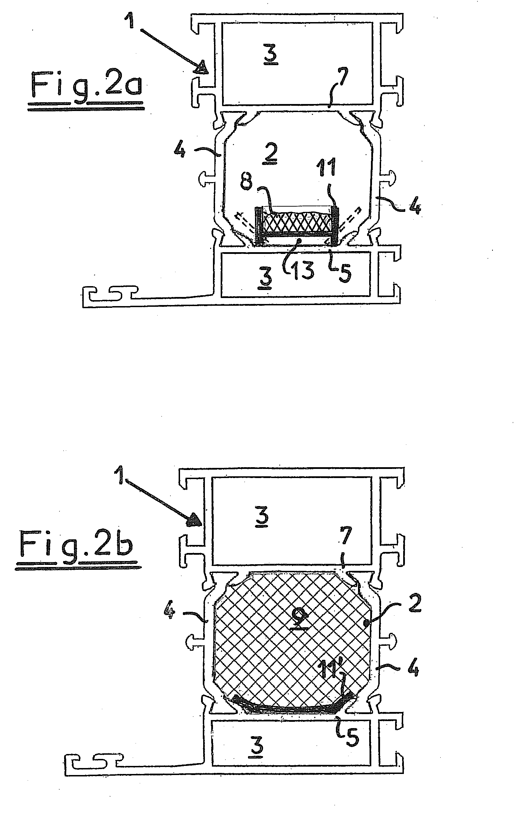

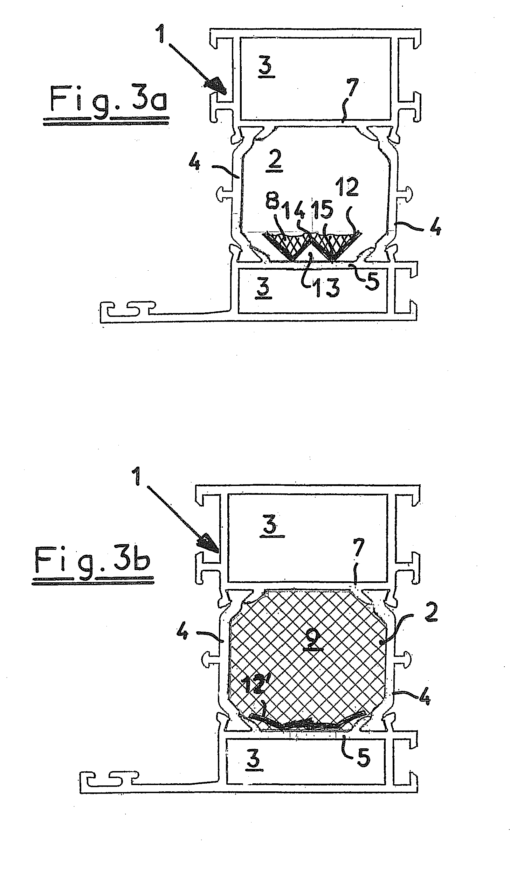

Um diese Verformung zu vermeiden, muss Gelegenheit gegeben sein, das sich durch "Überschäumen" bildende überschüssige Volumen im Querschnitt auffangen zu können. Dazu sind in Figur 2 und 3 die Träger zum Einbringen der aufzuschäumenden Masse derart ausgebildet, dass darunter ein Ausgleichsquerschnitt 13 zwischen dem Träger und dem Kammerboden 5 gebildet ist. Dazu weist der Träger 11 eine "H"-form (Figuren 2a, 2b) oder eine "W"-Form (Figuren 3a, 3b) auf.

Die "H"-Form (Fig. 2a) wird von den Seitenschenkeln des Trägers 11 dadurch gebildet, dass sich diese auf beiden Seiten der Trägerbasis in beide Richtungen rechtwinklig zum Träger 10 erstrecken. Dieser Träger nimmt mit seiner Wannenform die aufzuschäumende Masse auf, während die Rückseite seiner Basis frei über dem Kammerboden 5 liegt. Somit wird zwischen der Basis und dem Kammerboden 5 der zum Volumenausgleich benötigte Ausgleichsquerschnitt 13 gebildet. Um die Verformung des Trägers zu begünstigen, ist es vorteilhaft, die Seitenschenkel in eine gegeneinander auswärts geneigte (in Figur 2a strichliert angedeutete) Stellung zu bringen. Die Figur 2b stellt das Hohlkammerprofil nach der Aufschäumung dar. Der Querschnitt der auszuschäumenden Kammer 2 ist mit aufgeschäumter Masse 9 gefüllt, wobei der nun verformte Träger 11' mehr oder weniger stark gegen den Kammerboden 5 gedrückt ist (Fig. 2b). Dabei verbleibt immer noch ein gewisser Rest-Querschnitt, der nicht voll ausgefüllt ist. Damit können nachträgliche Volumenänderungen ausgeglichen werden.

Die "W"-Form (Fig. 3a) des Trägers 12 wird durch eine geknickte Basis erreicht. Dabei bleibt die Höhe der mittigen Spitze 14 des "W" vorteilhaft unter der Höhe der äußeren Schenkel. Die "Täler" 15 des "W"-förmigen Troges 10 nehmen die aufzuschäumende Masse 8 auf. Aufgeschäumt füllt die aufgeschäumte Masse 9 den Querschnitt der auszuschäumenden Kammer 2, wobei nun der W-förmig ausgebildete Träger 12 verformt ist und seine Basis im Wesentlichen gegen den Kammerboden 5 gedrückt ist (Fig. 3b). Die Schrägstellung der seitlichen Schenkel begünstigt die Verformung, während unter der Spitze 14 des "W"-förmig ausgebildeten Trägers 12 auch hier ein gewisser Rest-Querschnitt verbleibt, der Druckerhöhungen infolge nachträglicher Volumenänderung durch Nachschäumen der aufgeschäumten Masse abfängt.

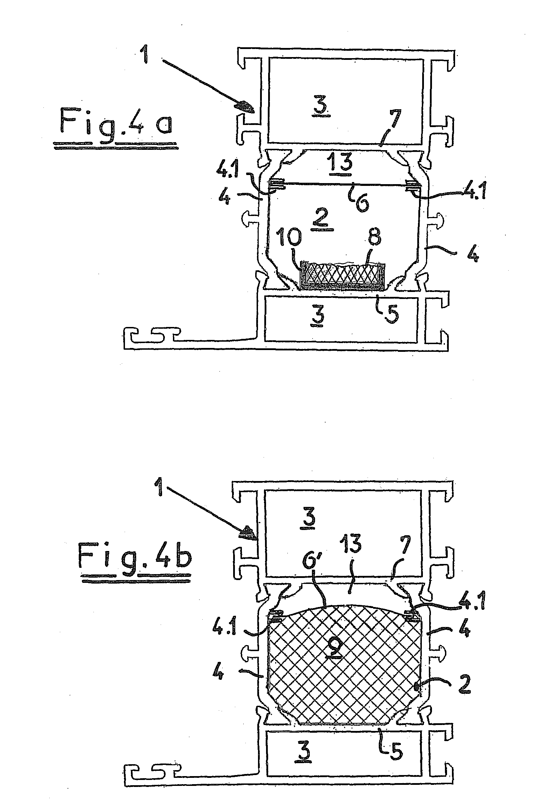

Die andere, alternative Ausführungsform des Mehrkammer-Hohlprofils 1 zeigt Figur 4a. Hier ist im Inneren der auszuschäumenden Kammer 2 eine sich über die Längserstreckung des Mehrkammer-Hohlprofils verlaufende Membran 6 vorgesehen, die sich beim "Überschäumen" zur Trennwandung 7 hin ausbiegen kann. Zur Aufnahme der Membran sind an den Seitenwänden 4 einander gegenüber liegende Aufnahmenuten 4.1 vorgesehen. Diese sich in Längsrichtung des Mehrkammer-Hohlprofils 1 erstreckenden Aufnahmenuten 4.1, die vorteilhaft angeformt sind, nehmen einen sich ebenfalls in Längsrichtung des Mehrkammer-Hohlprofils 1 erstreckenden dünnen, verformbaren Streifen aus einem dünnen, verformbaren Material - etwa einer Folie aus Kunststoff oder Leichtmetall - als Membran 6 auf. Schäumt das in bestimmungsgemäßer Menge eingebrachte, aufschäumbare Material auf, füllt es die Kammer 2 bis an die Membran 6, die bei einem "Überschäumen" durchgebogen wird, so dass sich überschüssige Masse in den Ausgleichsquerschnitt 13 hinein ausdehnen kann und so den Platz findet. Dadurch wird ein Auftreten von auf die Seitenwandungen 4 des Mehrkammer-Hohlprofils 1 einwirkenden, diese verformenden Kräfte unterbunden. Auch wird ein Restvolumen zur Verfügung gestellt, das bei einem nachträglichen Aufschäumen verfügbar ist. Dadurch wird auch dem Auftreten von der einem Nachschäumen auftretender, zu Verformungen führender Kräfte entgegen gewirkt.

### Bezugszeichenliste

- 01: Mehrkammer-Hohlprofil
- 02: auszuschäumende Kammer
- 03: benachbarte, nicht auszuschäumende Kammer
- 04: Seitenwandung
- 04.1: innere Aufnahmenuten
- 05: Kammerboden
- 06: Verformbare Membran
- 07: Trennwandung
- 08: aufzuschäumende Masse
- 09: aufgeschäumte Masse
- 10: wannenförmiger Träger
- 10': wannenförmiger Träger, deformiert
- 11: H-förmiger Träger
- 11': H-förmiger Träger, deformiert
- 12: W-förmiger Träger
- 12': W-förmiger Träger, deformiert
- 13: Ausgleichsquerschnitt
- 14: Mittige Spitze des "W"
- 15: Täler des "W"

## Patentansprüche

1. Aus Metall, insbesondere Aluminium, oder aus Kunststoff extrudiertes Mehrkammer-Hohlprofil (1) beliebiger Länge, mit von festen Wänden umgebenen Kammern, von denen mindestens eine der Kammern (2) mit einem Kammerquerschnitt, gebildet von einem Kammerboden (5) und einer die auszuschäumende Kammer (2) gegenüber einer nicht auszuschäumenden Kammer (3) abgrenzenden Trennwandung (7), sowie von diese beiden verbindenden Seitenwänden (4), ausschäumbar ist, wobei in diese Kammer (2) ein wannenförmig ausgebildeter Träger (10) mit dem für das Ausschäumen notwendigen Kunststoffmaterial (8), insbesondere Polyurethan-Material eingeführt ist, **dadurch gekennzeichnet, dass** zur Bildung des Ausgleichquerschnitts (13) der sich in Richtung der Längserstreckung des Mehrkammer-Hohlprofils (1) erstreckende, eingeführte Träger (11) eine Basis mit beidseits angeordneten, nach beiden Seiten abstehenden Schenkeln aufweist, die sich zur Bildung eines Ausgleichquerschnittes (13) zwischen der Rückseite des Trägers (10) und Kammerboden (5) auf diesem abstützen, und dass der Träger (10) unter Aufschäumdruck zur Verringerung des Ausgleichquerschnittes (13) verformbar ist.

2. Mehrkammer-Hohlprofil nach Anspruch 1, **dadurch gekennzeichnet, dass** die abstehenden Schenkel rechtwinklig zum Kammerboden (5) stehen, so dass der Träger (11) einen "H"-förmigen Querschnitt aufweist.

3. Mehrkammer-Hohlprofil nach Anspruch 1, **dadurch gekennzeichnet, dass** die abstehenden Schenkel spitzwinklig zum Kammerboden (5) stehen, so dass der Träger (12) einen "M"-förmigen oder einen "W"-förmigen Querschnitt aufweist.

4. Mehrkammer-Hohlprofil nach einem der Ansprüche 2 oder 3, **dadurch gekennzeichnet, dass** die zur Trennwandung (7) gerichteten Teile der abstehenden Schenkel des Trägers (10; 11; 12) gegeneinander auswärts gerichtet sind.

5. Mehrkammer-Hohlprofil nach Anspruch 1, **dadurch gekennzeichnet, dass** zur Bildung des Ausgleichquerschnitts (13) in der auszuschäumenden Kammer (2) ein sich in Richtung der Längserstreckung des Mehrkammer-Hohlprofils (1) erstreckender, den Aufschäumquerschnitt (9) einengender Schlauch vorgesehen ist, dessen Querschnitt unter Aufschäumdruck zur Verringerung des Hohlraumvolumens (13) verkleinerbar ist.

6. Aus Metall, insbesondere Aluminium, oder aus Kunststoff extrudiertes Mehrkammer-Hohlprofil (1) beliebiger Länge, mit von festen Wänden umgebenen Kammern, von denen mindestens eine der Kammern (2) mit einem Kammerquerschnitt, gebildet von einem Kammerboden (5) und einer die auszuschäumende Kammer (2) gegenüber einer nicht auszuschäumenden Kammer (3) abgrenzenden Trennwandung (7), sowie von diese beiden verbindenden Seitenwänden (4), ausschäumbar ist, wobei in diese Kammer (2) ein wannenförmig ausgebildeter Träger (10) mit dem für das Ausschäumen notwendigen Kunststoffmaterial (8), insbesondere Polyurethan-Material eingeführt ist, **dadurch gekennzeichnet, dass** zur Bildung des Ausgleichquerschnitts (13) in der auszuschäumenden Kammer (2) eine sich in Richtung der Längserstreckung des Mehrkammer-Hohlprofils (1) erstreckende, den Ausgleichquerschnitt (13) vom Querschnitt der auszuschäumenden Kammer (2) abteilende Membran (6) vorgesehen ist, die unter Aufschäumdruck in den Ausgleichquerschnitt (13) hinein verformbar ist.

7. Mehrkammer-Hohlprofil nach Anspruch 6, **dadurch gekennzeichnet, dass** die Membran (6) zwischen den Seitenwänden (4) verläuft, wobei die Seitenwände (4) Aufnahmenuten (4.1) aufweisen, zur Aufnahme der Seitenränder der Membran (6).

8. Mehrkammer-Hohlprofil nach Anspruch 7, **dadurch gekennzeichnet, dass** die Seitenwandungen (4) der auszuschäumenden Kammer (2) des Hohlprofils (1) zur Aufnahme der Membran (6) beidseits mit sich in Richtung der Längserstreckung des Hohlprofils (1) erstreckenden Aufnahmenuten (4.1) versehen sind.

9. Mehrkammer-Hohlprofil nach Anspruch 6, 7 oder 8, **dadurch gekennzeichnet, dass** die Membran (6) elastisch oder plastisch verformbar ist und gebildet ist aus einem elastisch oder plastisch verformbaren dünnen Material, vorzugsweise einem Folienstreifen aus Kunststoff.

10. Mehrkammer-Hohlprofil nach Anspruch 6, 7 oder 8, **dadurch gekennzeichnet, dass** die verformbare Membran (6) aufreißbar ist und gebildet ist aus einem dünnen Material, vorzugsweise aus Leichtmetall, insbesondere aus Aluminium.
